(19) Europäisches Patentamt / European Patent Office / Office européen des brevets

(11) **EP 4 712 487 A1**

(12) **EUROPEAN PATENT APPLICATION**

(43) Date of publication:
**18.03.2026 Bulletin 2026/12**

(21) Application number: **24200762.3**

(22) Date of filing: **17.09.2024**

(51) International Patent Classification (IPC):
*H04N 21/235* (2011.01)      *H04N 21/266* (2011.01)
*H04N 21/414* (2011.01)      *H04N 21/44* (2011.01)
*H04N 21/4623* (2011.01)     *H04N 21/6334* (2011.01)
*H04N 21/8358* (2011.01)     *H04N 21/2389* (2011.01)
*H04N 21/4363* (2011.01)     *H04N 21/439* (2011.01)

(52) Cooperative Patent Classification (CPC):
**H04N 21/2335; H04N 21/235; H04N 21/23892;
H04N 21/41422; H04N 21/43637; H04N 21/4394;
H04N 21/44209; H04N 21/8358**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Harman Becker Automotive Systems GmbH
76307 Karlsbad (DE)**

(72) Inventor: **Kalinichenko, Victor
85640 Putzbrunn (DE)**

(74) Representative: **Kraus & Lederer PartGmbB
Thomas-Wimmer-Ring 15
80539 München (DE)**

(54) **DETECTION OF LOSS OF CONNECTION OF A CLOUD BASED SIGNAL PROCESSING OF MULTIMEDIA SIGNALS**

(57) The application relates to a method for operating a multimedia system with encoding a key sequence into a multimedia stream in order to generate an amended multimedia stream, the key sequence comprising a predefined sequence of numbers. The amended multimedia stream with the encoded key sequence is transmitted to a remote processing entity for a remote processing of the amended multimedia stream, and a multimedia stream is received from the remote processing entity. It is determined whether the received multimedia stream includes the encoded key sequence, wherein in response to determining that the received multimedia stream does not include the encoded key sequence, the multimedia system uses, for an output of the multimedia system a locally processed multimedia stream processed locally within the multimedia system.

Fig. 5

EP 4 712 487 A1

## Description

Technical Field

The present application relates to a method for operating a multimedia system, to the corresponding multimedia system, and to a computer program comprising program code.

Background

Motor vehicles often include in-vehicle entertainment systems including media players and radio receivers. Those vehicle entertainment systems can be used to deliver media including audio and/or video content to a user of the system or any other passenger of the vehicle. The media may be sourced from radio signals, external devices such as mobile phones or a multitude of other sources. To improve a listening experience, digital signal processing can be employed to adjust the quality of the audio and/or video data. Digital signal processing can add desirable audio and video effects in order to suit the preferences of the end-user. Digitally processed signals can be played by a multimedia system using the vehicle audio system which can include speakers and/or screens. Often the desired audio features require sophisticated transformations of audio signals, such as multi-channel processing, cabin equalization, surround effects, including very computationally expensive methods, like wave-guide synthesis, automatic genre detection and customization of the parameters of the audio system to the played-back genre etc. These transformations may require additional processing power from the system, thus, leading to the necessity of using more expensive Digital Signal Processor (DSP), more memory with low access time, thus, increasing the cost of the entire multimedia system. Taking into account that not every user and not every time when using the in-car multimedia system will require all expensive audio features it is important for car manufacturers to keep the price of the multimedia system low, with giving user a possibility to optionally extend its features by outsourcing the lack of processing resources and/or memory to the cloud computers with transmitting the audio-signals to be transformed in the cloud and receiving the transformed signals from the cloud using fast wireless communication channels (like 4G or 5G).

WO2023/140963A1 discloses a method where a cloud processing is used for outsourcing the real-time multimedia processing so that extended computational and memory capabilities are provided for in-vehicle audio systems. WO2024/110033A1 discloses a similar approach with an outsourcing of a sophisticated processing to an external portable device. In case of loss of connection or crash of the processed signals generated at the cloud, the audio signal from the cloud is not available or not correct. In addition to the cloud-based processing, a local processing within the multimedia system could be used. During playback of the sound or multimedia signal processed by the cloud, it can happen that the connection with the cloud is suddenly lost or the cloud algorithm crashes. It is then necessary to be able detect such a case and to stop using this signal as processed by the cloud within a short time. Accordingly, the detection of loss of a connection or a crash of the externally processed signal should be rather quick and reliable.

Accordingly, it is an object of the invention to provide a mechanism which provides a quick and reliable solution for detecting a loss of connection to an external processing capacity which provides the signal to be output by the multimedia system.

Summary

This need is met by the features of the independent claims. Further aspects are described in the dependent claims.

According to a first aspect a method for operating a multimedia system is provided wherein the method comprises the step at the multimedia system of encoding a key sequence into a multimedia stream in order to generate an amended multimedia stream wherein the key sequence comprises a predefined sequence of numbers. The multimedia system transmits the amended multimedia stream with the encoded key sequence to a remote processing entity for the remote processing of the amended multimedia stream e.g. for providing to the end user additional multimedia features, which are not available in the (base) multimedia system. The multimedia system then receives from the remote processing entity a received multimedia stream and the system determines whether the received multimedia stream includes the encoded key sequence. In response to determining that the received multimedia stream does not include the encoded key sequence, the multimedia system uses, for an output of the multimedia system a locally processed multimedia stream processed locally within the multimedia system, i.e. without additional multimedia features.

Furthermore, the corresponding multimedia system is provided configured to operate as discussed above or as discussed in further detail below. Furthermore, a computer program comprising program code to be executed by at least one processing unit of a multimedia system is provided wherein execution of the program code causes the at least one processing unit to carry out a method as discussed above or as discussed in detail below.

Accordingly, the multimedia system sends a special sequence of numbers to the remote processing entity which can occur in the cloud and expects to receive it back from the cloud sometime later in case the connection with the cloud is present and the processing algorithm at the remote processing works normally. When the multimedia system determines that the processed multimedia stream as received from the remote processing entity does not include the encoded key sequence the connection is considered broken, and the system can switch to the local processing provided within the multimedia system. Locally processed multimedia stream means that it is only processed within the multimedia system and no processing outside the multimedia system is carried out.

Furthermore, a method is provided at the remote processing entity, the method comprising the steps of receiving from a multimedia system, an amended multimedia stream including an encoded key sequence, the key sequence comprising a predefined sequence of numbers. The key sequence is extracted from the amended multimedia stream, and multimedia features are added to the amended multimedia stream from which the key sequence has been removed, in order to obtain an enhanced multimedia stream. The key sequence is encoded into the enhanced multimedia stream, and the enhanced multimedia stream with the encoded key sequence is transmitted to the multimedia stream where it is received as received multimedia stream. Furthermore, the corresponding remote processing entity is provided. Finally, a system is provided comprising the multimedia system and the remote processing entity. The enhanced multimedia stream sent back to the multimedia system could include in addition to other multimedia features, a different number of channels compared to the amended stream as received. By way of example, two audio channels may be received and after processing the enhanced stream sent back could be a 5.1 audio stream or a stream with one channel for each speaker, wherein the number of speakers can range from 2 over 5 to 21 speakers.

It is to be understood that the features mentioned above and features yet to be explained below can be used not only in the respective combinations indicated, but also in other combinations or in isolation without departing from the scope of the present invention. Features of the above-mentioned aspects and embodiments described below may be combined with each other in other embodiments unless explicitly mentioned otherwise.

Brief description of the drawings

The foregoing and additional features and effects of the application will become apparent from the following detailed description when read in conjunction with the accompanying drawings in which like reference numerals refer to like elements.

Fig. 1 shows a schematic architectural view of a system where a multimedia system can use a remote or a cloud processing before the signal is output by the multimedia system.
Fig. 2 shows a schematic view of a mixer used in the system of Fig. 1 to avoid audible unpleasant artifacts when switching from an internal processing to a cloud processing or back.

Fig. 3 shows an example schematic view of a key sequence which might be encoded into the multimedia stream at the multimedia system.
Fig. 4 shows an example flowchart of a method describing the principles of detecting a connection between the multimedia system and the cloud based processing.
Fig. 5 shows a further schematic more detailed view of a diagram implementing the detection of loss of connection between the cloud and the multimedia system.
Fig. 6 shows a schematic view of a key sequence at the sending part and at the receiving part.
Fig. 7 shows a schematic view of a control logic present in the multimedia system which operates depending on the fact whether the key sequence is detected in the received multimedia stream.
Fig. 8 shows a possible timing diagram for switching from a cloud based audio processing to a local processing and back to the cloud based processing.
Fig. 9 shows a schematic view of the encoding of a key sequence into samples of an audio frame.
Fig. 10 shows a schematic view of a generation of the key sequence to be implemented into the bitstream of the audio samples.
Fig. 11 shows a schematic view of a key sequence as implemented into an audio stream.
Fig. 12 shows a schematic view of a bitstream used for detecting the start of the key sequence in the received stream.
Fig. 13 shows a schematic view of a flowchart comprising the steps carried out at the multimedia system for detecting the loss of a connection to a remote processing capability.

Detailed description

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.

The drawings are to be regarded as being schematic representations, and elements illustrated in the drawings are not necessarily shown to scale. Rather, the various elements are represented such that their function and general purpose becomes apparent to a person skilled in the art. Any connection or coupling between functional blocks, devices, components of physical or functional units shown in the drawings and described hereinafter may also be implemented by an indirect connection or coupling. A coupling between components may be established over a wired or wireless connection. Functional blocks may be implemented in hardware, software, firmware, or a combination thereof.

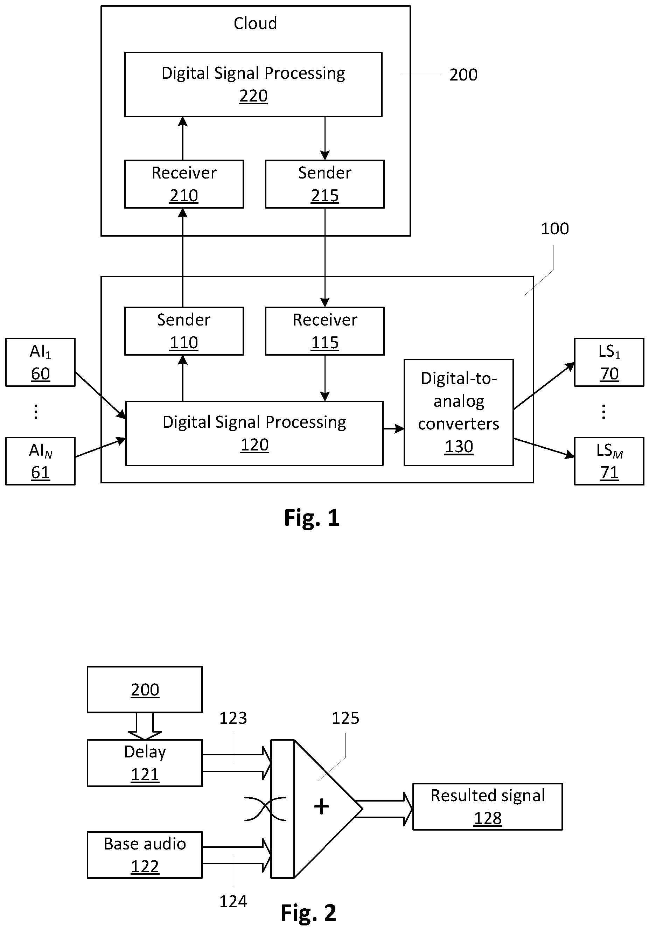

Fig. 1 shows a schematic view of a system where a multimedia system 100 can use a cloud or remote environment 200, hereinafter simply called cloud, for outsourcing a real-time multimedia processing. The multimedia system 100 may be a vehicle multimedia system such as a vehicle audio system receiving an audio input channels 60 $AI_1$-$AI_N$ where two such channels form a stereo signal and six channels might form a 5.1 signal source. The audio inputs, which are assumed to be digital signals are fed to a DSP, digital signal processor, 120 in the multimedia system where they can be processed locally before they are fed a digital-to-analog converter 130 where the audio outputs 70, 71, $LS_1$-$LS_M$ are output. Digital input channels 60-61 can be optionally obtained from analog signals by means of using Analog to Digital Converters (not shown in Fig. 1). Accordingly, the number of input channels $N$ dan be different to the number of output channels $M$, but $N$ can also correspond to $M$. The multimedia system 100 furthermore comprises an interface including a sender 110 and a receiver 115 where the audio inputs are sent to receiver 210 in the cloud 200 where an enhanced signal processing may be carried out by the signal processing unit 220 with adding multimedia features, which is then sent back using sender 215 to the system 100 as enhanced multimedia stream with the encoded key sequence. The multimedia features can include multi-channel processing, cabin equalization, surround effects, or similar effects. The audio channels can be synchronous audio channels, and the signal received from the cloud is passed again via the digital signal processing unit 120 for finalizing the processing such as providing the power management which makes sure that the power that is limited for each type of loudspeaker is within the desired range. The signal is then routed to the power stages which transforms the digital signal into analogue signals fed to $M$ physical loudspeakers. Such an outsourcing allows the user of a conventional audio system to expand the audio experience. In the example shown the processing remote from the multimedia system 100 is carried out in the cloud, however it should be understood that any other location for remote processing could be used where multimedia signals including audio and/or video can be processed and enhanced and sent back to the multimedia system 100.

In case of loss of connection between units 110 and 210 or 215 and 115, or in case of crash of the signal flow in the cloud 200 the audio signal multimedia signal from the cloud is not available or corrupted. In order to prevent any audible unpleasant effects caused by appearing the corrupted signal at the loudspeakers 70, 71, the output of the receiver 115 shall not be fed to the output. Instead, only locally processed channels within the processing unit 120 or system 100 shall be used.

Fig. 2 shows a schematic view how parts of the signal processing unit 120 which can perform a smooth switching of the audio flows in case the connection to the remote processing is lost. As shown in Fig. 2 the signal processed from the cloud 200 (the output of the receiver 115) is fed to a delay element 121 which adds a certain delay such as 10-20 ms wherein the signal from the cloud, called cloud channels 123 hereinafter, is then fed to a mixer 125 which is also called a morphing unit which carries out a smooth transition from the signal from the cloud to a local or base processing capacity symbolized by. The local processing capacity within unit 122, which is the part of the local Digital Signal Processing Unit 120, generates locally processed channels 124. It is assumed that the number of audio channels in the multi-channel bus 123 and the number of audio channels in the multi-channel bus 124 are equal. Moreover, for each single audio channel within the bus 123 there is a correspondent associated channel within the bus 124. For example, "front left woofer" channel coming from the cloud (within the bus 123) is functionally associated with the "front left woofer" channel of the bus 124 obtained locally within unit 120. The system shown in Fig. 2 can also be called cross-morpher and cross-morphing can be implemented as a multi-channel mixer module which has variable input gains. In case of switching from the cloud-based processing through delay element 121, to the base audio processing channels or local processing channels 124, it is possible to simultaneously perform processes such as the changing of gains for the cloud channels 123 from 1.0 to 0.0 within a given time such as 10 ms and for the correspondent functionally associated local channels 124 to change the gain from 0.0 to 1.0. During this morphing or switching process it is possible to support that the sum of the gains for the channel coming from the cloud and the correspondent functionally associated locally processing channel is equal to 1.0. Following this principle will keep the gain the same during the switching from on source to the other. The cloud channels can parse through the delay element 121 or delay line which is needed to avoid appearing the corrupted signal at the input of mixer 125 immediately after the connection with the cloud is lost. With this approach delay line will be keeping the valid audio samples of the cloud channels while the morphing is being performed. The duration of the morphing process is preferably tuned in such a way that it should not exceed the duration of the delay. A similar process can be carried out when switching from the local processed channels to the cloud channels when the connection with the cloud is restored and the software at the remote processing is working normally.

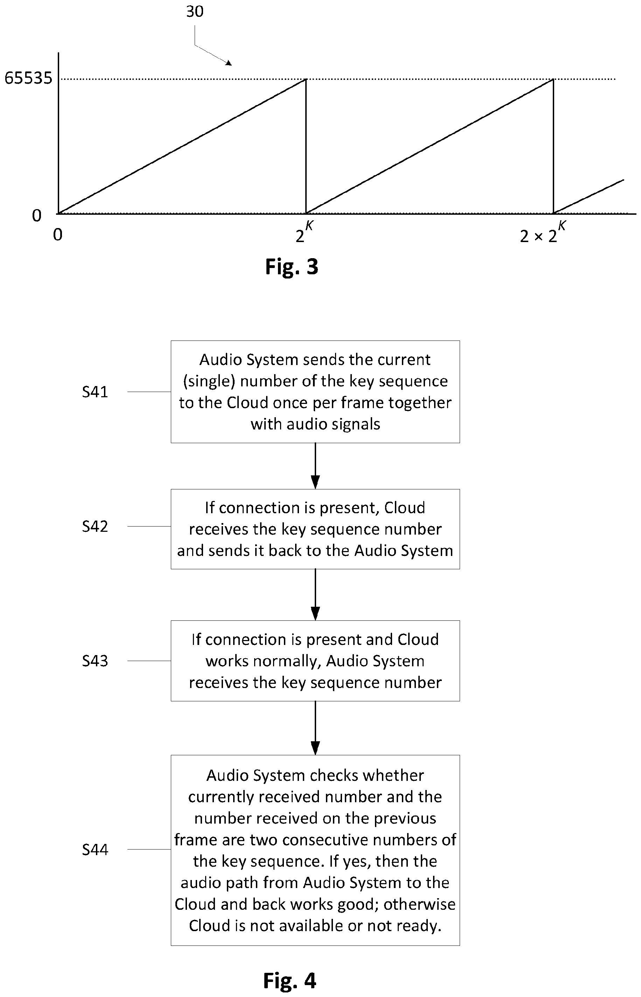

During the playback of the signal processed in the cloud, it can happen that the connection is suddenly lost or the algorithm at the cloud crashes. It is then necessary to stop using the cloud channels within a short time which does not exceed the time delay provided by delay element 121 and to switch to the playback to the local channels. The solution discussed below can detect this loss of connection very quickly with a high reliability and the idea is based on sending a special sequence, named hereinafter the key sequence, to the remote processing and is based on expecting to receive it back from the remote processing sometime later in case the connection with the remote processing is present and the algorithm at the remote processing works normally. This sequence, the key sequence is sent together with the audio channels to the cloud. It can be generated in the DSP 120 and the key sequence can be in a simple case an incrementing sequence of numbers starting with 0 which rolls back to the starting value when having reached some predefined maximum value such as 65,535, Fig. 3. The elements of the key sequence were numbers in the example given. The digital bit sequence representing one element of the key sequence can be a number or word coded as bit sequence. For the sake of clarity, the expression "number" will be used in the following for an element of the key sequence.

An example of the key sequence is as follows:

Example of the key sequence: $a[0] = 0$,
$a[k] = a[k - 1] + 1$ if $k$ is non-divisible to $P$, where $P$ is the desired period of the key sequence in samples, i.e. for $k=q \cdot P$, $q = 0, 1, 2 \ldots$,
otherwise $a[k] = 0$.
$P$ shall obey the following conditions: $P > [D_{max} \cdot Fs/B]$, where
$D_{max}$ - maximal considerable delay "vehicle" - "Cloud"-"vehicle", sec;
$F_S$ - sampling frequency, Hz;
$B$ - Block (frame) size in samples;
[.] - operation of taking integer part.

In many practical applications it is reasonable to select $P$ as a power of 2: $P=2^K$, where

$$K > [log_2(D_{max} \cdot Fs/B)] \, .$$

A more general definition of the key sequence could be as follows:

$a[0]$ - an arbitrary value;

$$a[k] = f(a[k - 1]),$$

for $k \neq qP$, where $q=0, 1,2,...$;

$$a[k] = a[0],$$

for $k = qP$,
$f$: $\forall m, n = 0 \ldots P - 1$, $m \neq n$, $a[m] \neq a[n]$; $f$-periodic function with the period $P$.

Fig.4 describes some steps carried out in the system shown in Fig. 1. Each sample of the key sequence can be sent once per audio frame (the length of the frame can be, for example, 32, 48, 64 samples, or more) (S41). Having received the sample of the key sequence and having finished processing the audio, the Cloud 200 will send the received key sequence sample back to the multimedia system 100 (S42), where the fact of having received the key sequence in S43 can be detected or not detected, depending on whether connection with the cloud 200 is present and the cloud 200 is working normally, or not. Using the above example of the key sequence, the detection of the key sequence on the receiving side of the system 100 can be done by checking the presence of two consecutive incrementing numbers (e.g., 66 and 67), or the maximum number followed by zero (like 65535 and 0) in two neighboring frames (S44). If the presence of such numbers is not detected, the path "audio system" - "cloud" - "audio system" is considered as broken. Having received the notification about unavailability of the cloud 200, the Digital Signal Processing unit 120 of the system 100 can start cross-morphing from the cloud audio to the local or base audio, using the mixer 125 discussed in connection with Fig. 2.

If the connection is restored again, or if the crashed cloud algorithm is reinitialized, the key sequence will be detected again, the system 100 can keep waiting during the certain time (keeping detecting the key sequence) before sending command to the mixer 125 to smoothly switch from the locally processed channels 124 audio to the cloud channels 123. This waiting time is needed to guarantee that all possible transient processes in the cloud have been finished and to let the delay line 121 be fully updated before the audio data from the Cloud 200 will be sent to the loudspeakers. This will also guarantee that the unpleasant audio artefacts caused by non-finished transient processes in the cloud audio algorithm will not be audible. The above waiting time could be defined by the developers of the Cloud algorithm and can be sent from the cloud 200 to the system 100 during synchronization cycle between system 100 and the cloud 200.

The cloud or remote processing entity 200 will analyze whether the key sequence is present in the multimedia stream as received from the multimedia system. The established fact of key sequence not being present in the received multimedia stream can be utilized for suspending a main signal processing usually done by the remote entity, thus, saving processing power of the remote entity for the other purposes and saving the energy, which would be required, if the main signal processing were no suspended by the remote entity.

The fact of the key sequence being present in the received multimedia stream after the period, in which the key sequence was not present in the received multimedia stream, can be utilized for re-enabling the main signal processing usually done by the remote entity

In the discussion above a general overview over the process was given. In the following, a more detailed explanation is given, how the interruption of the cloud processing can be detected fast and in an effective manner. As discussed above, the method is based on using in the multimedia system 100 the special digital signal named "key sequence" as shown in Fig. 3, which can be sent to the cloud 200 as the part of the audio stream and then returned to the audio system after some delay, assuming that the Cloud is available and works as expected. The above delay is caused by multiple factors like accumulating (buffering) the data prior to sending them via a medium to the Cloud, delay of the medium, delays within the cloud, delays in preparing the processed audio data for sending back to the Car Audio System and some other factors. This delay can vary depending on the speed of the capacity of the communication channel with the cloud. The transmission of the audio signal to the cloud and back can be based on any wireless transmission technology such as a cellular network, or WIFI.

The key sequence is a periodic sequence with the period longer than the maximal considerable delay within the path "system 100"-"Cloud 200"-"system 100" in samples at the sampling frequency divided to the block size; with all mutually different values within one period. A simple example of the key sequence, satisfying this condition is the incrementing saw-like sequence described as:

$$a[0] = 0,$$

$$a[n] = a[n\text{-}1]\text{+}1,$$

if $n$ is non-divisible to $2^K$; otherwise $a[n] = 0$.

The example of such a key sequence for $K = 16$ is depicted in Fig. 3.

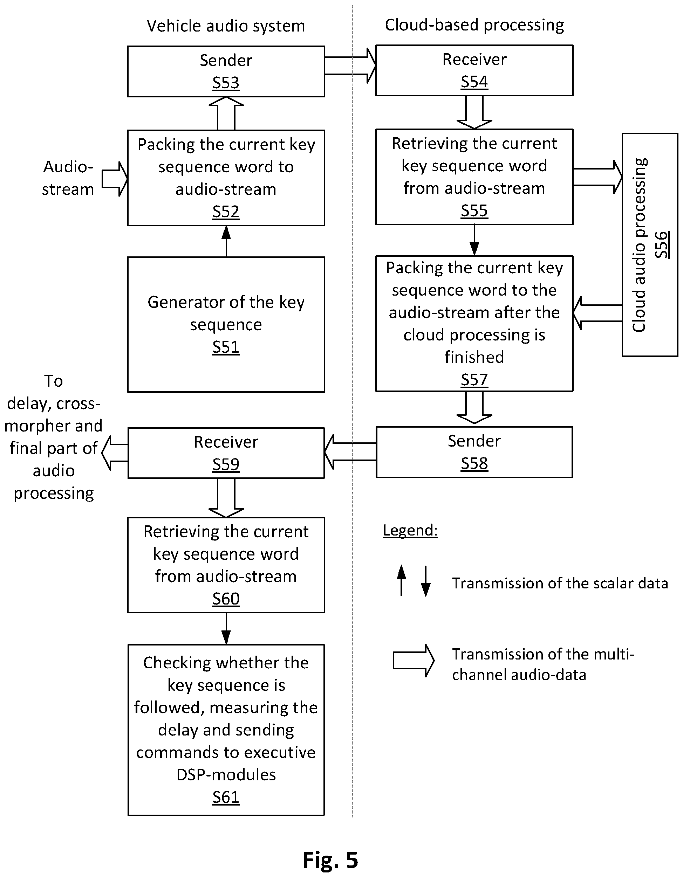

Fig. 5 describes a more detailed view of the processing in the different entities shown in Fig. 1, where the multimedia system 100 is a vehicle audio system. Once the key sequence is generated in step S51, it is packed to the real-time audio stream in step S52, using one of the packing methods to be discussed later, and then sent to the Cloud by step S53, using known hardware and software devices and protocols.

Data processing in the cloud 200 can be done in synchronous or in asynchronous mode. In asynchronous mode the chunk of the data received from the vehicle audio system is processed after having been received and sent back to the vehicle audio system after the data processing is finished, without waiting for a frame sync and other (typical for real-time processing) events. In the synchronous mode, cloud 200 will generate internal clock and frame syncs, which are used for generating real-time events used for launching audio processing and possibly control algorithms. Prior to having launched the real-time processing, the cloud can form the chunk of data of a fixed length, corresponding to the duration of the cloud frame sync, which can be the same as the frame sync of the vehicle audio system, or can be different. In this case the duration of the cloud frame sync is a multiplication factor (typically defined as a natural number, e.g., 2, 10, 32) of the duration of the frame sync of the vehicle audio system. This fixed length remains the same for every frame. For asynchronous processing, cloud can process variable chunks of audio data, without forming frames of the fixed length. It should be noticed that the synchronous Cloud processing is more complicated as it requires clock and frame synchronization with the vehicle audio system, considering jitters in clock and frame frequencies.

Receiving the audio data and preparing them for processing by the cloud is done in block S54 followed by step S55, where the samples of the key sequence are retrieved from the audio stream. After step S55 the audio stream is routed to the Cloud Audio Processing, step S56. The audio data chunk obtained after step S56 is routed in step S57, where the samples of the key sequence retrieved in the step S55 are packed to the processed audio data chunk for their further transmission back to the vehicle audio system. In S57 all the samples of the received key sequence are packed with the same offsets to the audio data chunk as they had been previously received in S54 and later retrieved by step S55. This approach allows keeping the information about delay of the signal with the sample precision. With the data having been ready (chunk of audio stream and with the key sequence), step S58 sends them to the vehicle audio system.

In the vehicle audio system, the incoming data are pre-processed in the Receiver (S59). Here the data are split into chunks with the length of the frame used in the vehicle audio system. After that the audio data are sent to the further audio processing and in parallel to a processing in S60 where the sample of the key sequence is possibly searched, retrieved, and fed to a processing in step S61, where it will be analyzed whether the key sequence is present or not followed by forming the corresponding action, depending on the case.

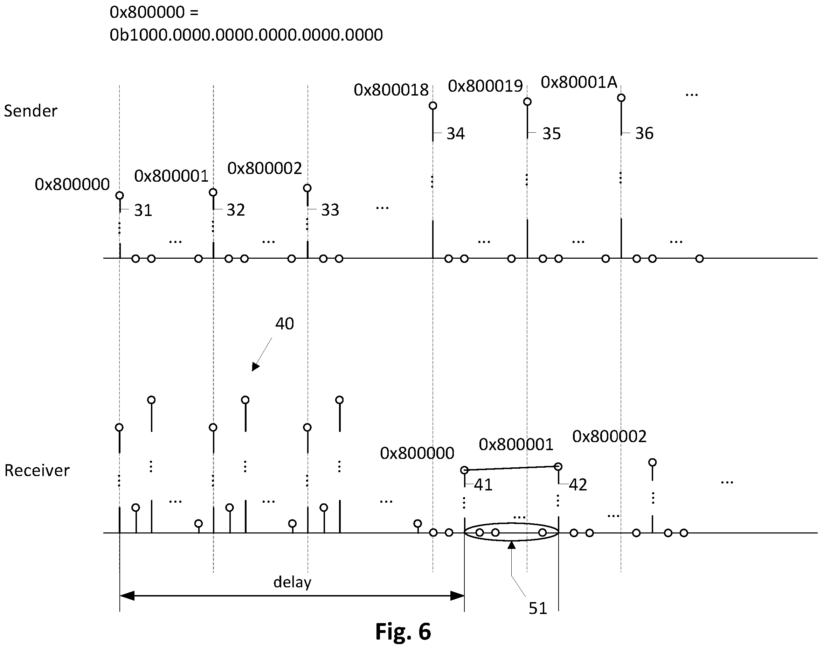

The passage of key sequence through the entire chain, from Car Audio System to the Cloud and back can be illustrated by the diagram in Fig. 6. In the upper graph, the first frame of the audio channel, dedicated for transmission of the key sequence named thereafter as "sync channel", contains value 0x800000 as the first value 31 of the key sequence followed by zeros for all other samples of the frame. The next frame starts with the next member 32 of the key sequence - 0x800001 followed by zeros until the end of the frame, etc. After having been passed through the Cloud and then read by the Receiver (S59) of the vehicle audio system the received content of the sync channel can be first filled with zeros or with some random values, arbitrary numbers, which had been contained in the receiving buffer before data transfer (e.g., via DMA) has started. As illustrated by the second or lower part of Fig. 6, these random values 40 will have been received until the first block of data is received from the cloud after some time, the values 41, 42, etc.. In this example the delay is 24 frames + 2 samples. If the frame size is 256 samples and the sampling frequency Fs= 48kHz, the delay is (24*256+2)/48000 = 128 ms. Thus, the key sequence may not only be used for detection of the accessibility of the cloud, but also for determining the delay (or latency) of the path "multimedia system - cloud - multimedia system". Determining this latency may be used for automated or semi-automated configuration of the delay line of the main multimedia system for synchronization of the streams 123 and 124. The criterion of detection of the first key sequence member can be formulated as follows: $p$ zeros followed by one of the previously emitted key sequence values 41, 42, followed by $F$-$p$-$w$ zeroes 51 within one frame, where $p=0...F$-1, $F$ - frame size in samples, $w$=const - bit-length of each word or number of the key sequence. It shall be noted that for successful guaranteed determining of the offset of the first bit of the key sequence the following condition must be followed: $F \geq 2w$. The fact of the stable receiving of the key sequence can be confirmed during the next frame, if the next expected value of the key sequence 0x800001 is received at the same offset of the frame as the first value 0x800000, or in other words, if the distance between appearing two values 0x800000 and 0x800001 exactly corresponds to the frame size.

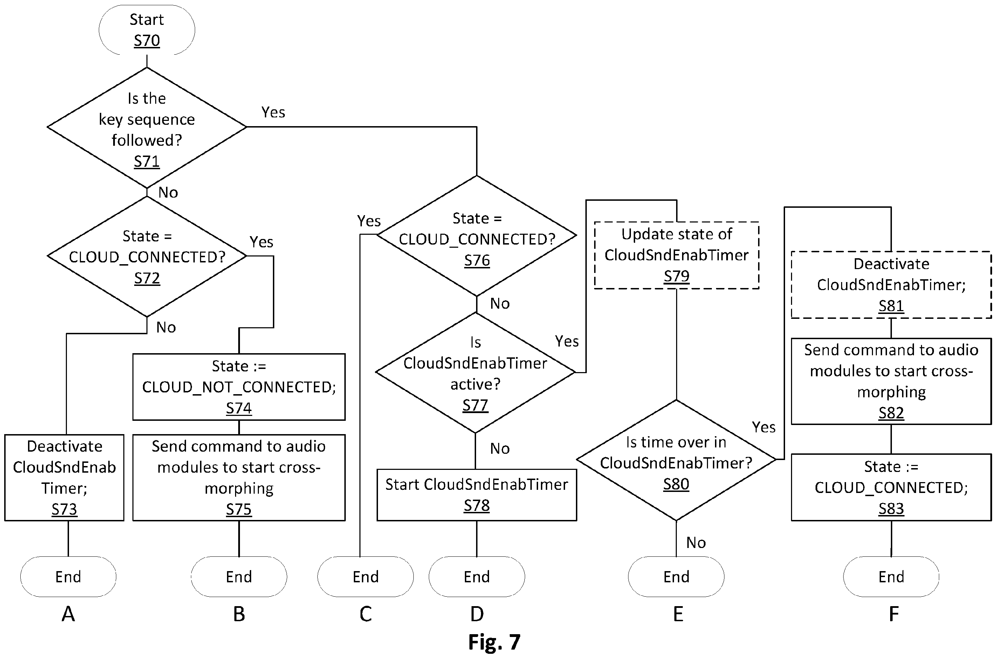

Fig. 7 describes a possible implementation of a control logic depending on the presence nor not of the key sequence in the stream received from the cloud 200. Fig. 7 defines a state machine algorithm of a logic implemented in the DSP 120.

One can define a variable State, which may have two values:

1) CLOUD_CONNECTED, which is set in case the connection with the Cloud is activated, i.e. the audio stream from the Cloud is used, i.e., the gains of the channels 123 of the mixer are set to 1.0 (see Fig. 2), or the morphing process for their setting to 1.0 has been initiated;
2) CLOUD_NOT_CONNECTED, in case the connection with the Cloud is deactivated, i.e. the audio stream from the Cloud is not used, i.e., the gains for the cloud channels 123 in the mixer are zeros (see Fig. 2), or the process of morphing them to zero has started.

The method of control logic starts in step S70, and in step S71 it is checked whether the key sequence 30 is followed. If this is not the case (NO in Fig. 7 of S71), it is checked in S72 whether the state is detected that the cloud is connected (S72) . Furthermore a *Cloud activation delay timer*, or shortly: *delay timer* (named as CloudSndEnabTimer) can be used, which will be used to introduce a delay needed to be held before starting activation the mixer 125 after the key sequence has been detected and followed. As previously mentioned, this delay can guarantee that all the transient processes in the Cloud have been finished before one can initiate cross-morphing to activate the Cloud audio.

In case the key sequence is not followed AND in case State=CLOUD_NOT_CONNECTED, one has the situation, that the key sequence is not detected for some time. In this case nothing is done except deactivating the above delay timer in S73 to be sure that the timer is off (in case it had been launched during one of the previous steps). This scenario is described in branch A where one should wait until the key sequence will be detected in the stream received from the cloud.

In case key sequence is not followed in S71, but State=CLOUD_CONNECTED in S72, the situation of loss of the key sequence (e.g., due to loss of connection) during some time of normal operational conditions of the Cloud is present. In this case one can switch the State to CLOUD_NOT_CONNECTED in S74 and initiate immediately cross-morphing from Cloud audio to Base audio in S75 (branch B).

Branch C describes the case when the Cloud has been functioning normally for some time so in S 76, i.e. key sequence is followed and State=CLOUD_CONNECTED. No action is needed here.

Branch D describes the case when the key sequence is detected in S71, but before this step the Cloud was not available (i.e. State=CLOUD_NOT_CONNECTED) in S76 and Cloud activation delay timer is not launched in S77. The only needed action here is to launch the delay timer in S78.

Branch E describes the case when the system has been detecting the key sequence for some time in S77, but the delay time in the Cloud activation delay timer is not yet over, i.e., one must keep waiting. No action is needed except possibly manual changing the state of timer if implementation of the delay timer assumes that it has to be triggered manually at every frame (e.g., by decrementing the down-counter variable) in S79. In the block-diagram, Fig. 7 this update is done before one can check the condition of the timer state. In S80 it is checked whether the time in the timer is over and in branch E this is not the case.

Branch F describes the case when we have been detecting the key sequence for the time, which has just exceeded the delay time needed for activating the cloud audio. In this case one should send the command to the mixer 125 to start smoothly activating the cloud audio stream with simultaneous deactivating the Base audio stream in step S82. One should also set State=CLOUD_CONNECTED in S 83 and possibly stop the delay timer as shown by step S81 (if it does not stop automatically after time is over).

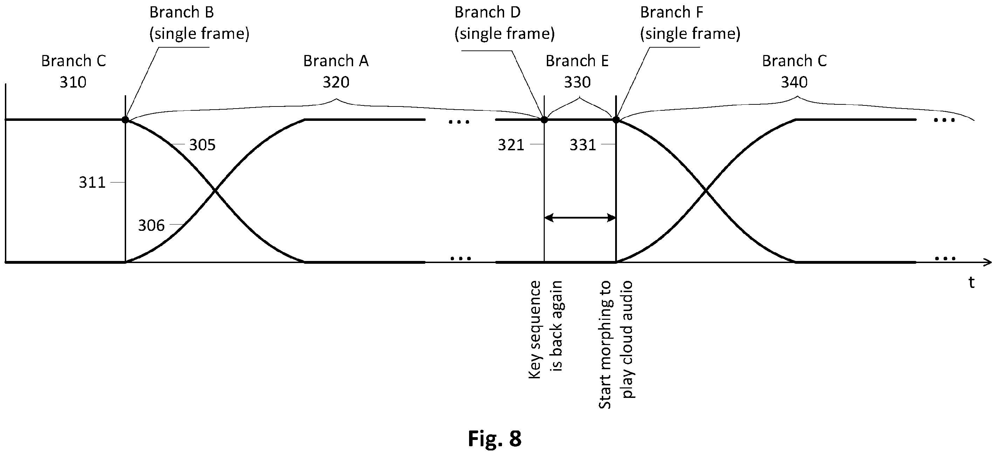

Activation and deactivation processes of cloud Audio can be demonstrated on the time diagrams in Fig. 8. Graph 305 describes the gain used for the cloud channel in the mixer 125 and graph 306 describes the gain for the locally processed channels. In the beginning (period 310) the Cloud is available, i.e., the key sequence has been receiving for some time (Branch C). At some point 311 something happens (e.g., the connection failure) so that in some frame the key sequence is not detected (Branch B). Immediately the command is sent to the mixer 125 to initiate quick and smooth fading out the audio stream from the Cloud and fading in the audio stream from the local audio system, to start using locally produced audio only (Branch A). It shall be noted that branch A or time period 320 includes both: cross-morphing stage and the stable state when the signal from the cloud is fully attenuated. At some point 321 the Cloud is available again and the key sequence is detected for the first time after a long time of having not been receiving (Branch D). For detection of the key sequence two consequent frames are needed to detect the incrementing sequence. At this time-point 321 the Cloud activation delay timer is on. In this example, it is assumed that the receiving of the key sequence is stable for a long time, so that during the next frames, time period 330, Branch E is active. After multiple number of frames, where the key sequence has been received, the timer signalizes that the delay time is over, and it is safe to start cross-morphing process to activate Cloud audio (Branch F) at point 331. The correspondent command is sent to the mixer 125. The duration of Branch F is one frame. Cross-morphing process is initiated, which enables cloud audio and disables local audio, as well as the period, when the cross-morphing is over, i.e., cloud audio is enabled, while Base audio is disabled, belongs to Branch C and time period 340.

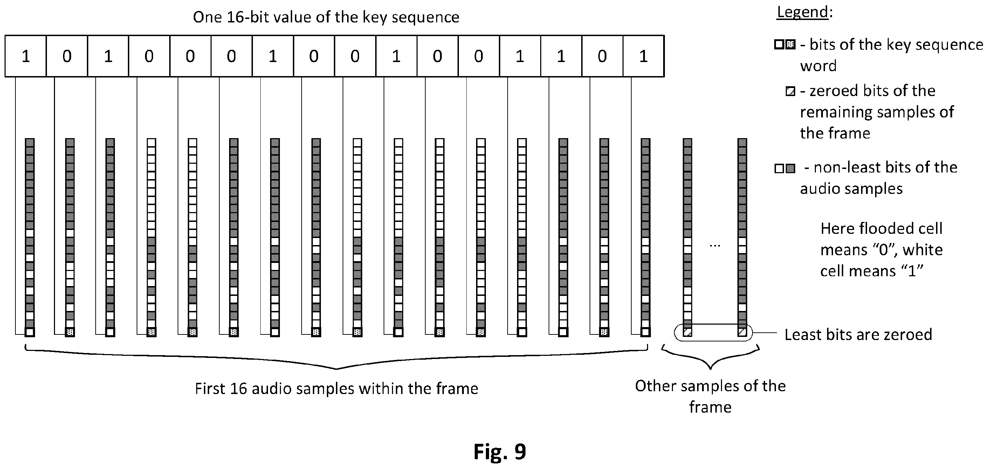

For the discussion above, it was assumed that for packing the key sequence to the audio stream, a presence of an extra (unused) audio channel dedicated for this purpose was assumed. This additional audio channel needed in the upstream direction to the cloud and the downstream direction back to the audio system may not always be possible. In the following Figures 9 to 12 a method is described where the key sequence is transmitted in the existing audio channels, in one of the channels 60, 61 of Fig. 1.

The idea is based on the following two assumptions:

1) the digitalized up-streamed and down-streamed signals are exploiting 24-32 bit values for storing their values;
2) changing their least bits (or the least bits of mantissa in case of floating-point format is used) will not acoustically influence the quality of the audio signal, where such changing happens.

Furthermore, one can assume that members of the key sequence are represented by 16-bit words and that one audio frame includes at least 32 samples. One word of the key sequence is split into 16 bits and the least bits (the least significant bits) of each of the first 16 audio samples by the corresponding 16 bits of the key sequence are overwritten as it is shown in Fig. 9. In Fig. 9, the white and gray bits show the non-least bits of the audio sample and grey means "0" and white means "1".

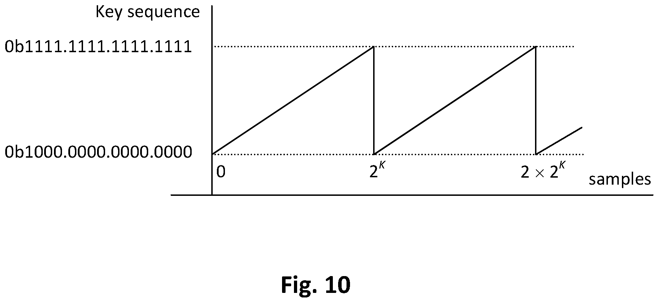

For the remaining samples of the same frame the least significant bits will be zeroed. These zeroes can be used for searching the beginning of the key sequence word if there is a delay of the key sequence by some number of samples within the frame. Moreover, for the successful search one can require that the elder bit of each number of the key sequence was always 1, as shown in Fig. 9 and/or 10.

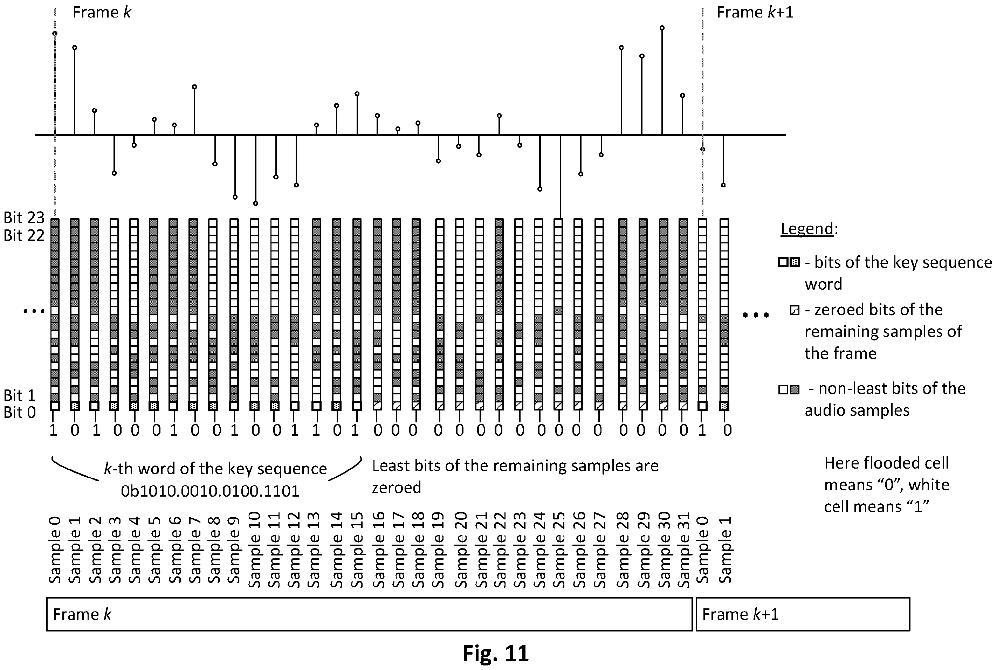

Fig. 11 shows the resulting illustration of the packed key sequence into the audio stream. Each word of the key sequence starts from the elder bit set to 1. This can allow both the cloud and the vehicle audio system to detect a beginning of the key sequence, if the transmission delay is not divisible to the length of the frame, e.g. if the upstream delay is 33 samples. In this case the first non-zero bit following the series of at least 16 zeros is the beginning of the word/number of the key sequence. Here it can be assumed that sacrificing the least bit of each audio sample of one of the audio channels does not cause any audible distortion.

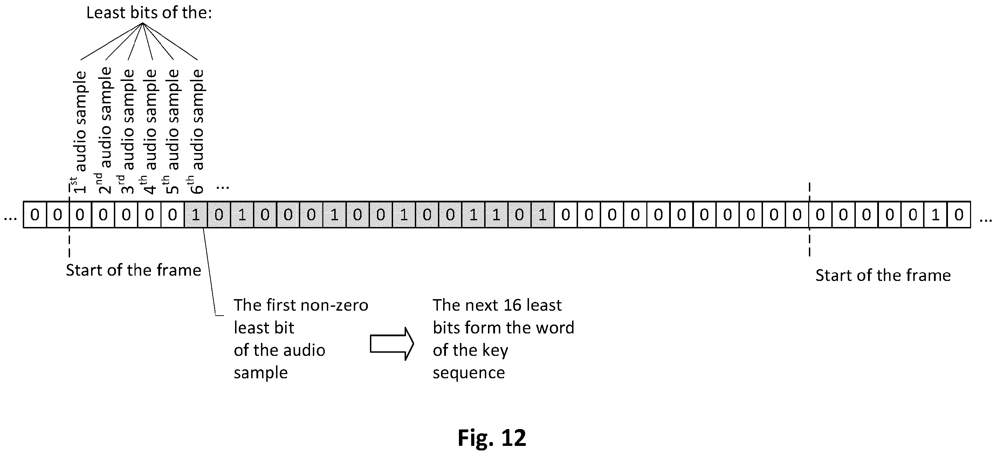

After receiving the audio stream from the cloud, it is necessary to find the word/number of the key sequence. It is especially important after the loss of the Cloud followed by the restored connection. A criterion for finding the beginning of the word of the key sequence in this case can be expressed as follows: having 1 in the least bit of an audio sample after series of at least 16 zeros in the least bits of previous audio samples. It can be noted that the series of at least 16 zeros should be counted from the previous frame, as also indicated in Fig. 12.

It may take 2 frames before it is possible to extract a single number or word of the key sequence. This can happen in case of using the encoding method without an extra channel for the transmission, where each bit of each number is embedded into the least bit of the audio samples of one audio channel. This case assumes that the offset of the first bit of the number of the key sequence is so big that the remaining samples within the frame will not be enough to encode all bits of the key sequence. By way of example, if the frame size is F=32 samples, and the offset of the first bit of the number relative to the first sample in the frame is 25 samples with a number of the key sequence having the size of 16 bits, then only 7 samples remain within the first frame to store the number. The next 9 bits will be stored in the next frame.

The proposed alternative method of packing the values of the key words into the audio stream based on using the least bits has the advantage that no extra audio channel is needed for the key sequence. At the same time, it could be considered as disadvantageous that in the worst case the word of the key sequence may be distributed between two frames so that checking whether the key sequence is followed or not may be delayed by one frame. To compensate for this delay, one can increase the memory for the delay by the number of audio samples in one frame.

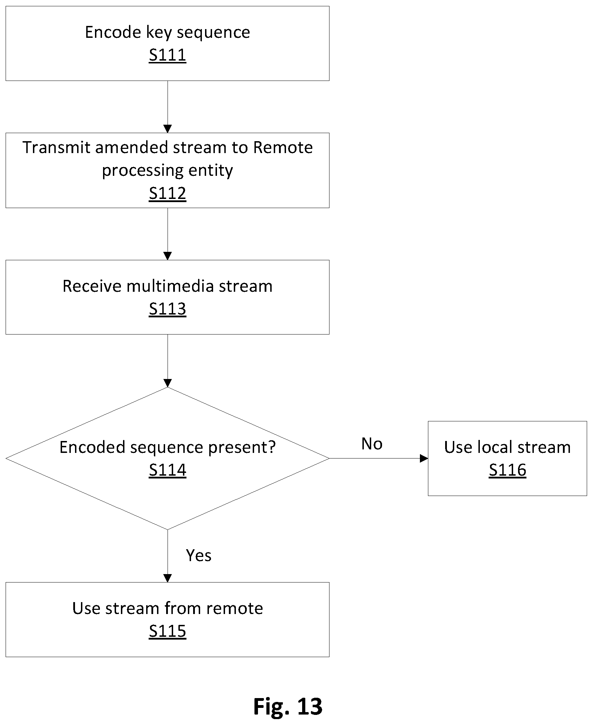

Fig. 13 summarizes some of the steps carried out in the above discussed method. In step S111 the key sequence is encoded into the media stream so that an amended multimedia stream is generated. The key sequence can be implemented as discussed in connection with Fig. 3 or 10 and the encoding may be possible in a separate channel of the audio channel which is only used for the transmission of the key sequence and not for audio samples. However as discussed in connection with Figs. 8-12 the key sequence may also be encoded into one of the channels of the multichannel media or audio stream. In step S 112 the amended multimedia stream including the key sequence is transmitted to a remote processing entity, in the discussion above the cloud environment. However, as indicated above it is not necessarily a cloud environment, it may also be provided at a defined location remote from the multimedia system which can be a vehicle multimedia system but which could also be a portable multimedia system having limited processing capacities. In step S 113 the multimedia stream as transmitted from the remote processing is received and in step S 114 it is determined whether the key sequence is present in the received media stream or not. If the encoded sequence is present, it can be assumed that the connection to the remote processing is working so that it is possible to use the media stream from the remote processing entity in step S 115. If the received media stream does not include the encoded sequence, one can follow that the connection is not working correctly (anymore) so that a local stream processed locally within the multimedia system is used for output. The changing or switching from one stream to the other was discussed above, especially in connection with Fig.7.

From the above said some general conclusions can be drawn:
In the method above, if it is determined that the received multimedia stream includes the encoded key sequence the multimedia system uses for the output the received multimedia stream received from the remote processing entity.

One option to determine that the encoded key sequence is present in the received multimedia stream is when two consecutive numbers from the predefined sequence of numbers are present in the received media stream.

The received multimedia stream can include a sequence of frames and it can be determined that the encoded key sequence is present in the received multimedia stream when two consecutive numbers from the predefined sequence of numbers are determined as being present, preferably in two consecutive frames of the sequence of frames.

The key sequence is preferably a periodic sequence having a periodicity which is longer than a value defined by a travel time of the multimedia stream to the remote processing entity and back to the multimedia system.

When the multimedia system uses for the output the locally processed multimedia stream and the multimedia stream starts to detect the encoded key sequence in the received multimedia stream, the output is switched from the locally processed multimedia stream to the received multimedia stream only after a defined time period after the starting of the detection has lapsed. As discussed in connection with Fig. 7 and 8 a timer might be used to make sure that the system only switches from one reception source to the other receptions source when any transient effects have finished.

The step of determining whether the received multimedia stream includes the encoded key sequence can include the step of detecting in the received media stream implemented as a bitstream a number of $p$ bits having the same bit value, followed by one number in the predefined sequence of numbers followed by another $F$-$p$-$w$ bits having the same bit value as $F$ being the number of samples within a frame, $p$ going from 0 to $F$-1 and $w$ is the bit-length of each number of the key sequence.

Furthermore, it can be determined that the encoded key sequence is present in the received multimedia stream when after detecting one number of the predefined sequence of numbers in a frame of the received multimedia stream at an offset from the beginning of the frame, the consecutive number of the predefined sequence of number is detected in the next frame at the same offset. This was discussed above in connection with Fig. 6.

The key sequence can be encoded into additional audio channel of the multimedia stream which is only used for the transmission of the key sequence and not for the multimedia content, however as an alternative the key sequence is encoded into one of the audio channels together with the audio signals and not separately from the audio signals.

Here the encoded key sequence can be encoded into a least significant bit in case a fixed point format of the audio samples is used or into a least significant bit of a mantissa in case floating point format of audio samples is used, where.

Furthermore, the least significant bits of all samples where no number of the predefined sequence of number is encoded, are all set to the same bit value, and preferably the most significant bit of all numbers of the key sequence are set to the opposite bit value. This makes the detections of the start of the number easier. In the situation shown in Fig. 10 to 12, the bit value was zero.

Furthermore, a latency of a path to the remote processing entity and back to the multimedia system is determined based in a position of a number present in the key sequence in a frame to be transmitted to the remote processing entity until a position of the same number of the key sequence when it is received in the received multimedia stream, wherein the latency is used for configuring a delay line before the locally processed multimedia stream is provided to the output

Summarizing the advantage of the proposed solution discussed above is the combination of simplicity, speed of detection and reliability. Furthermore, the detection of a possible unavailability of the remote processing is done in real-time meaning in the time when the result of detection of cloud availability guaranteed.

**Claims**

1.  A method for operating a multimedia system, the method comprising:

    - encoding a key sequence into a multimedia stream in order to generate an amended multimedia stream, the key sequence comprising a predefined sequence of numbers,
    - transmitting the amended multimedia stream with the encoded key sequence to a remote processing entity for a remote processing of the amended multimedia stream,
    - receiving, from the remote processing entity, a received multimedia stream,
    - determining, whether the received multimedia stream includes the encoded key sequence, wherein in response to determining that the received multimedia stream does not include the encoded key sequence, the multimedia system uses, for an output of the multimedia system a locally processed multimedia stream processed locally within the multimedia system.

2.  The method of claim 1, wherein if it is determined that the received multimedia stream includes the encoded key sequence, the multimedia system uses, for the output of the multimedia system the received multimedia stream received from the remote processing entity.

3.  The method of claim 1 or 2, wherein it is determined that the encoded key sequence is present in the received multimedia stream when 2 consecutive numbers from the predefined sequence of numbers are present in the received media stream.

4.  The method claim 3, wherein the received multimedia stream includes a sequence of frames, wherein it is determined that the encoded key sequence is present in the received multimedia stream when 2 consecutive numbers from the predefined sequence of numbers are determined.

5.  The method of any preceding claim, wherein the key sequence is a periodic sequence having a periodicity longer than a value defined by a travel time of the multimedia stream to the remote processing entity and back to the multimedia system.

6.  The method of any preceding claim, wherein when the multimedia system uses for the output the locally processed multimedia stream and the multimedia system starts to detect the encoded key sequence in the received multimedia stream, the output is switched from the locally processed multimedia stream to the received multimedia stream only after a defined time period after the starting of the detection has lapsed.

7.  The method of any preceding claim, wherein determining whether the received multimedia stream includes the encoded key sequence comprises detecting in the received multimedia stream implemented as bitstream, a number of $p$ bits having the same bit value, followed by one number in the predefined sequence of numbers, the first bit of which having the opposite value as compared to the values of the $p$ bits, followed by $F\text{-}p\text{-}w$ bits having the same bit value as the bit value of the first $p$ bits in the frame, with $F$ being the number of samples within a frame, $p$ going from 0 to $F\text{-}1$ and w being the bit-length of each word of the key sequence, assuming that $F \geq 2 \cdot w$.

8.  The method of any preceding claim, wherein it is determined that the encoded key sequence is present in the received multimedia stream, when after detecting one number of the predefined sequence of numbers in a frame of the received multimedia stream at an offset from a beginning of the frame, to detect the consecutive number of the predefined sequence of numbers in a next frame with the same offset.

9.  The method of any preceding claim, wherein the key sequence is encoded into an additional audio channel of the multimedia stream only used for a transmission of the key sequence to the remote processing entity and not for multimedia content.

10. The method of any of claims 1 to 8, wherein the multimedia stream includes a plurality of audio channels, wherein the key sequence is encoded into one of the plurality of audio channels.

11. The method of claim 10, wherein the encoded key sequence is encoded into a least significant bit of the samples present in a frame of the multimedia stream.

12. The method of claim 11, wherein the least significant bits of all samples where no number of the predefined sequence of numbers is encoded, are all set to the same bit value, while the most significant bit of all the numbers of the key sequence are set to the opposite bit value.

13. The method of any preceding claim, further determining a latency of a path to the remote processing entity and back to the multimedia system, based in a position of a number present in the key sequence in a frame to be transmitted to the remote processing entity until a position of the same number of the key sequence when it is received in the received multimedia stream, wherein the latency is used for configuring a delay line before the locally processed multimedia stream is provided to the output.

**14.** A multimedia system comprising a memory and at least one processing unit, the memory containing instructions executable by said at least one processing unit, wherein the multimedia system is configured to

- encode a key sequence into a multimedia stream in order to generate an amended multimedia stream, the key sequence comprising a predefined sequence of numbers,
- transmit the amended multimedia stream with the encoded key sequence to a remote processing entity for a remote processing of the amended multimedia stream,
- receive, from the remote processing entity, a received multimedia stream,
- determine, whether the received multimedia stream includes the encoded key sequence, wherein in response to determining that the received multimedia stream does not include the encoded key sequence, the multimedia system uses, for an output of the multimedia system a locally processed multimedia stream processed locally within the multimedia system.

**15.** The multimedia system of claim 14, further being configured to carry out a method as mentioned in any of claims 2 to 12.

**16.** A computer program comprising program code to be executed by at least one processing unit of a multimedia system, wherein execution of the program code causes the at least one processing unit to carry out a method as mentioned in any of claims 1 to 13.

**17.** A method carried out at a remote processing entity, the method comprising:

- receiving from a multimedia system, an amended multimedia stream including an encoded key sequence, the key sequence comprising a predefined sequence of numbers,
- extracting the key sequence from the amended multimedia stream,
- adding multimedia features to the amended multimedia stream from which the key sequence has been removed, in order to obtain an enhanced multimedia stream
- encoding the key sequence into the enhanced multimedia stream,
- transmitting the enhanced multimedia stream as received multimedia stream to the multimedia system.

**18.** A remote entity comprising a memory and at least one processing unit, the memory containing instructions executable by said at least one processing unit, wherein the remote entity is configured to carry out a method as mentioned in claim 17.

## Cloud

Digital Signal Processing
**220**

— 200

Receiver
**210**

Sender
**215**

100

Sender
**110**

Receiver
**115**

$AI_1$
**60**

⋮

$AI_N$
**61**

Digital Signal Processing
**120**

Digital-to-analog converters
**130**

$LS_1$
**70**

⋮

$LS_M$
**71**

**Fig. 1**

**200**

123

125

Delay
**121**

+

Resulted signal
**128**

Base audio
**122**

124

**Fig. 2**

30

65535

0

0     $2^K$     $2 \times 2^K$

**Fig. 3**

S41 — Audio System sends the current (single) number of the key sequence to the Cloud once per frame together with audio signals

S42 — If connection is present, Cloud receives the key sequence number and sends it back to the Audio System

S43 — If connection is present and Cloud works normally, Audio System receives the key sequence number

S44 — Audio System checks whether currently received number and the number received on the previous frame are two consecutive numbers of the key sequence. If yes, then the audio path from Audio System to the Cloud and back works good; otherwise Cloud is not available or not ready.

**Fig. 4**

Vehicle audio system | Cloud-based processing

| Sender S53 | Receiver S54 |

Audio-stream → Packing the current key sequence word to audio-stream S52

Retrieving the current key sequence word from audio-stream S55 → Cloud audio processing S56

Generator of the key sequence S51

Packing the current key sequence word to the audio-stream after the cloud processing is finished S57

To delay, cross-morpher and final part of audio processing ← Receiver S59 ← Sender S58

Retrieving the current key sequence word from audio-stream S60

Checking whether the key sequence is followed, measuring the delay and sending commands to executive DSP-modules S61

Legend:

↑ ↓  Transmission of the scalar data

⇨  Transmission of the multi-channel audio-data

**Fig. 5**

EP 4 712 487 A1

0x800000 =
0b1000.0000.0000.0000.0000.0000

Sender

0x800000

0x800001

0x800002

0x800018   0x800019   0x80001A   ...

31   32   33   34   35   36

40

Receiver

0x800000   0x800001   0x800002

41   42

51

delay

**Fig. 6**

```
                          Start
                          S70

                           |
                           v
                   ┌─────────────────┐
                   │     Is the      │        Yes
                   │  key sequence   │──────────────────────────────┐
                   │   followed?     │                              |
                   │      S71        │                              |
                   └─────────────────┘                              |
                           | No                                     v
                           v                              ┌──────────────────┐
                   ┌─────────────────┐                    │     State =      │      Yes
                   │     State =     │      Yes           │  CLOUD_CONNECTED?│──────────────┐
                   │ CLOUD_CONNECTED?│──────┐             │      S76         │              |
                   │      S72        │      |             └──────────────────┘              |
                   └─────────────────┘      |                     | No                      |
                           | No             |                     v                         |
                           |                |             ┌──────────────────┐    Yes       |
                           |                |             │       Is         │─────────┐    |
                           |                |             │ CloudSndEnabTimer│         |    |
                           |                |             │     active?      │         |    |
                           |                |             │      S77         │         |    |
                           |                |             └──────────────────┘         |    |
                           |                v                    | No                  |    |
                           |        ┌───────────────┐            v                     |    |
                           |        │   State :=    │   ┌──────────────────┐           |    |
                           |        │CLOUD_NOT_     │   │ Start            │           |    |
                           |        │CONNECTED;     │   │ CloudSndEnabTimer│           |    |
                           |        │    S74        │   │      S78         │           |    |
                           |        └───────────────┘   └──────────────────┘           |    |
                           |                |                                          |    |
```

┌ ─ ─ ─ ─ ─ ─ ─ ─ ─ ─ ┐
  Update state of
  CloudSndEnabTimer
        S79
└ ─ ─ ─ ─ ─ ─ ─ ─ ─ ─ ┘

┌ ─ ─ ─ ─ ─ ─ ─ ─ ─ ┐
    Deactivate
  CloudSndEnabTimer;
        S81
└ ─ ─ ─ ─ ─ ─ ─ ─ ─ ┘

```
   ┌──────────────┐   ┌──────────────────┐                          ┌──────────────────┐   ┌──────────────────┐
   │  Deactivate  │   │ Send command to  │                          │   Is time over   │   │ Send command to  │
   │ CloudSndEnab │   │ audio modules to │                          │     in           │   │ audio modules to │
   │   Timer;     │   │ start cross-     │                          │ CloudSndEnabTimer?│   │ start cross-     │
   │    S73       │   │ morphing         │                          │      S80         │   │ morphing         │
   └──────────────┘   │    S75           │                          └──────────────────┘   │    S82           │
        |             └──────────────────┘                                  |               └──────────────────┘
        |                    |           ┌────────────┐  ┌──────────┐       |                       |
        |                    |           │ Start Cloud│  │          │       |               ┌──────────────────┐
        |                    |           │SndEnabTimer│  │          │       |               │    State :=      │
        |                    |           │    S78     │  │          │       |               │ CLOUD_CONNECTED; │
        |                    |           └────────────┘  └──────────┘       |               │      S83         │
        v                    v                v              v              v                       v
      ┌─────┐            ┌─────┐           ┌─────┐        ┌─────┐         ┌─────┐              ┌─────┐
      │ End │            │ End │           │ End │        │ End │         │ End │              │ End │
      └─────┘            └─────┘           └─────┘        └─────┘         └─────┘              └─────┘
         A                  B                 C              D               E                    F
```

**Fig. 7**

Branch C
340

Branch F
(single frame)

Branch E
330

331

Start morphing to
play cloud audio

Key sequence
is back again

321

Branch D
(single frame)

Branch A
320

Branch B
(single frame)

305

306

Branch C
310

311

**Fig. 8**

One 16-bit value of the key sequence

| 1 | 0 | 1 | 0 | 0 | 0 | 1 | 0 | 0 | 1 | 0 | 0 | 1 | 1 | 0 | 1 |

Legend:

- bits of the key sequence word

- zeroed bits of the remaining samples of the frame

- non-least bits of the audio samples

Here flooded cell means "0", white cell means "1"

Least bits are zeroed

First 16 audio samples within the frame

Other samples of the frame

EP 4 712 487 A1

**Fig. 9**

**Fig. 10**

Fig. 11

Fig. 12

```
            ┌─────────────────────────────┐
            │      Encode key sequence     │
            │            S111              │
            └──────────────┬──────────────┘
                           │
                           ▼
            ┌─────────────────────────────┐
            │ Transmit amended stream to   │
            │     Remote processing entity │
            │            S112              │
            └──────────────┬──────────────┘
                           │
                           ▼
            ┌─────────────────────────────┐
            │   Receive multimedia stream  │
            │            S113              │
            └──────────────┬──────────────┘
                           │
                           ▼
```

Encoded sequence present?
S114

No → Use local stream
S116

Yes

Use stream from remote
S115

**Fig. 13**

Europäisches
Patentamt
European
Patent Office
Office européen
des brevets

# EUROPEAN SEARCH REPORT

**Application Number**

EP 24 20 0762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2023/140963 A1 (HARMAN INT IND [US]) 27 July 2023 (2023-07-27) * abstract * * paragraph [0016] - paragraph [0019] * * paragraph [0036] - paragraph [0039] * * paragraph [0045] - paragraph [0053] * * paragraph [0064] - paragraph [0068] * * paragraph [0072] - paragraph [0073] * * figures 5,6,7 * | 1-18 | INV. H04N21/235 H04N21/266 H04N21/414 H04N21/44 H04N21/4623 H04N21/6334 H04N21/8358 H04N21/2389 H04N21/4363 H04N21/439 |
| Y | US 2009/091655 A1 (RUSSELL MICHAEL E [US] ET AL) 9 April 2009 (2009-04-09) * abstract * * paragraph [0010] * * paragraph [0013] * * paragraph [0019] - paragraph [0022] * | 1-18 | |
| A | JEZDIMIROVIC JOVANA ET AL: "Security enhancement of LSB-based audio steganography method", 2023 ZOOMING INNOVATION IN CONSUMER TECHNOLOGIES CONFERENCE (ZINC), IEEE, 29 May 2023 (2023-05-29), pages 77-82, XP034376174, DOI: 10.1109/ZINC58345.2023.10174020 [retrieved on 2023-07-11] * abstract * * page 77, column 1 - page 78, column 1 * * figure 1 * | 1-18 | |
| A | US 2013/179535 A1 (BAALU ARVIN [IN] ET AL) 11 July 2013 (2013-07-11) * abstract * * paragraph [0028] - paragraph [0029] * * paragraph [0040] - paragraph [0041] * * figure 10 * | 1-18 | |

**TECHNICAL FIELDS SEARCHED (IPC)**

H04N

The present search report has been drawn up for all claims

| Place of search | Date of completion of the search | Examiner |
|---|---|---|
| The Hague | 12 February 2025 | Fantini, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 0762

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | | Publication date | Patent family member(s) | | Publication date |
|---|---|---|---|---|---|
| WO 2023140963 | A1 | 27-07-2023 | CN | 118575481 A | 30-08-2024 |
| | | | EP | 4470218 A1 | 04-12-2024 |
| | | | KR | 20240142431 A | 30-09-2024 |
| | | | WO | 2023140963 A1 | 27-07-2023 |
| US 2009091655 | A1 | 09-04-2009 | CN | 101933333 A | 29-12-2010 |
| | | | EP | 2188999 A2 | 26-05-2010 |
| | | | KR | 20100080838 A | 12-07-2010 |
| | | | RU | 2010118478 A | 20-11-2011 |
| | | | US | 2009091655 A1 | 09-04-2009 |
| | | | WO | 2009048766 A2 | 16-04-2009 |
| US 2013179535 | A1 | 11-07-2013 | EP | 2613573 A1 | 10-07-2013 |
| | | | US | 2013179535 A1 | 11-07-2013 |
| | | | US | 2015081905 A1 | 19-03-2015 |
| | | | US | 2017150289 A1 | 25-05-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023140963 A1

- WO 2024110033 A1